# EUROPÄISCHE PATENTSCHRIFT

(11) **EP 0 787 349 B1**
(45) Veröffentlichungstag und Bekanntmachung des Hinweises auf die Patenterteilung: **14.04.1999**
(21) Anmeldenummer: 95934616.4
(22) Anmeldetag: 19.10.1995
(51) Int. Cl.: H01C 17/06

(54) **KERAMISCHER ELEKTRISCHER WIDERSTAND UND DESSEN VERWENDUNG**
CERAMIC ELECTRICAL RESISTOR AND ITS USE
RESISTANCE ELECTRIQUE EN CERAMIQUE ET SON UTILISATION

(30) Priorität: 19.10.1994 DE 4437324; 18.10.1995 DE 19538695
(43) Veröffentlichungstag der Anmeldung: 06.08.1997
(73) Patentinhaber: ROBERT BOSCH GMBH, 70442 Stuttgart (DE)
(72) Erfinder: GEISSINGER, Albrecht, D-75417 Mühlacker (DE); OBERLE, Jürgen, D-71065 Sindelfingen (DE); TESCHNER, Werner, D-70619 Stuttgart (DE); BOEDER, Horst, D-71069 Sindelfingen (DE); HEUSSNER, Karl-Heinz, D-71229 Leonberg (DE)
(86) Internationale Anmeldenummer: DE9501452
(87) Internationale Veröffentlichungsnummer: WO9613044

(56) Entgegenhaltungen:
- EP-A- 0 412 428
- US-A- 4 634 756

## Beschreibung

Die Erfindung betrifft ein Verfahren zur Herstellung eines keramischen elektrischen Widerstandes nach der Gattung der Ansprüche 1 und 11.

Aus der EP-A 0 412 428 A1 sind Keramiken auf der Basis siliciumorganischer Polymere mit Füllstoffen intermetallischer Stoffe, Metalle und Metallhydride bekannt. Jedoch sind Anwendungen in elektrischen Schaltungen in Form von Widerständen oder Leitern unbekannt.

Während metallische Heizleiter bis 1300 °C eingesetzt werden können, beträgt die Maximaltemperatur keramischer Heizleiter ca. 1800 °C. Keramische Heizleiter nach dem Stand der Technik sind nur mit sehr niedrigen oder sehr hohen spezifischen Widerstand verfügbar (z.B. MoSi₂ 2 x 10 ⁻² Ohm cm; SiC 5 Ohm cm). Zwischenwerte können mit herkömmlichen keramischen Materialien kaum eingestellt werden. Auch durch Mischen keramischer Pulver mit unterschiedlichen spezifischen Widerständen kann der elektrische Widerstand einer Sinterkeramik nur in engen Grenzen variiert werden, da durch die Zugabe fremder Stoffe die Sinterfähigkeit stark beeinträchtigt wird.

Es ist Aufgabe der Erfindung, keramische elektrische Widerstände beziehungsweise Heizleiter für Hochtemperaturanwendungen zu schaffen. Dabei ist es ein weiteres Ziel der Erfindung, den spezifischen elektrischen Widerstand in einfacher und sicher reproduzierbarer Weise einzustellen.

Das erfindungsgemäße Verfahren zur Herstellung eines keramischen elektrischen Widerstandes mit den kennzeichnenden Merkmalen der Ansprüche 1 bzw. 11 ermöglicht die Lösung dieser Aufgabe, insbesondere für den Einsatz bei hohen Temperaturen. Beim erhaltenen keramischen elektrischen Widerstand können verschiedene Füllstoffpulver mit unterschiedlichen elektrischen Eigenschaften eingesetzt werden. Eine Beeinträchtigung der Keramik ist weitestgehend ausgeschlossen, da das Verdichtungsverhalten während der Pyrolyse maßgeblich von der thermischen Zersetzung des Polymers und nicht von den Sintereigenschaften der verwendeten Pulver bestimmt wird.

Durch Versuche hat es sich gezeigt, daß bei Einhaltung der stofflichen Zusammensetzung des Ausgangsmaterials die Formgebung mit in der Kunststoff- oder Keramikverarbeitung gebräuchlichen Verfahren gewährleistet ist, wobei vorgegebene spezifische Widerstandswerte im Bereich von 10⁻⁶ bis 10¹¹ Ohm cm nach der Pyrolyse einstellbar sind. Besonders zeitstabile Widerstände und Leiter konnten bei Pyrolyse-Temperaturen im Bereich von 1200° bis 1500° C hergestellt werden. Dabei wird eine theoretische Dichte von 70 % - 98 % erreicht.

Durch die in den Unteransprüchen angegebenen Merkmale und Maßnahmen werden weitere Verbesserungen erreicht.

Wird die Pyrolyse unter Inertgas, Formiergas oder Reaktionsgas ausgeführt, so erhält man Widerstände, die gering schwinden, maßhaltig, rißfrei und porenarm sind. Vorzüglich eignen sich Ar, NH₃, N₂ und deren Gasmischungen als Pyrolyseatmosphäre.

Unter inerter Ar-Atmosphäre können chemische Reaktionen nur zwischen Füller und Polymer, nicht jedoch mit der Atmosphäre auftreten. Reduzierende NH₃-Atmosphäre führt zu einer Verringerung des C-Anteils im Matrix-Material und somit zu einer geringeren elektrischen Leitfähigkeit als unter Ar. Bei der Pyrolyse unter reaktiver N₂-Atmosphäre können Füller- und/oder Matrixbestandteile mit dem Pyrolysegas zu Nitriden reagieren und dabei ebenfalls die elektrische Leitfähigkeit des Verbundkörpers verändern.

Zur Formgebung durch Gießen, Extrudieren, Warmpressen und/oder Spritzgießen erwies es sich als günstig, ein kondensationsvernetztes, bei Raumtemperatur festes Polysiloxan einzusetzen und derartige Widerstände oder Leiter herzustellen.

Der elektrische Widerstand der mit dem erfindungsgemäßen Verfahren erhaltenen Keramik zeigt durch Dosierung der Füllstoffe im gewünschten Verhältnis dann sehr vorteilhaft einen positiven Temperaturkoeffizienten, wenn eine Mischung von Molybdändisilicid mit Silicium eingesetzt wird. Ein Mischungsverhältnis MoSi₂:Si = 20:20 Volumenprozent bezogen auf das Volumen des Widerstandsmaterials, eignet sich insbesondere für Glühelemente mit Aufheizzeiten von wenigen Sekunden für Glühstiftkerzen.

Weiterhin können als Füllstoffe vorteilhaft vorpyrolysierte und/oder ausgehärtete metallorganische Polymere neben elektrisch leitenden Nichtmetallen, intermetallischen Verbindungen oder Metallen eingesetzt werden. Damit ist es möglich, die unterschiedlichen elektrischen Eigenschaften verschiedener Matrixmaterialien nebeneinander für einen Widerstand oder Leiter auszunutzen, wobei die Nachteile nur eines Matrixmaterials vermieden und die Herstellungsmöglichkeiten erweitert werden.

Im folgenden wird die Erfindung anhand der Beispiele und mit Bezug auf die beiliegenden Zeichnungen näher erläutert:

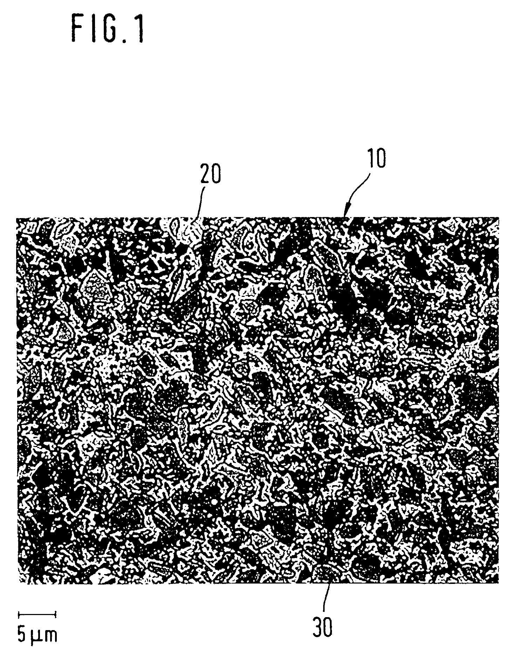

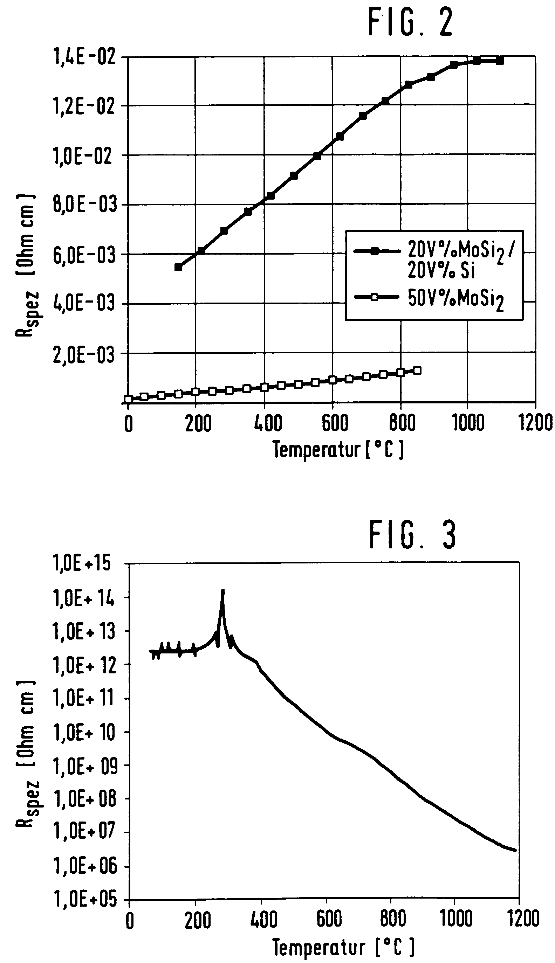

Figur 1 zeigt das Gefüge eines Verbundkörpers mit 50 Vol.% MoSi₂ gemäß Beispiel 1, Figur 2 zeigt die Temperaturabhängigkeit des spezifischen elektrischen Widerstandes R_{spez} zweier Ausführungen von mit dem erfindungsgemäßen Verfahren erhaltenen Widerständen mit positivem Temperaturkoeffizienten, Figur 3 zeigt die Temperaturabhängigkeit des spezifischen elektrischen Widerstandes R_{spez} einer Ausführung eines erfindungsgemäßen Widerstandes mit negativem Temperaturkoeffizienten.

Figur 1 zeigt das Gefüge eines Widerstands 10 aus Polysiloxan mit 50 Vol.% MoSi₂-Füllstoff, der bei 1200° C im Argonstrom pyrolysiert wurde. Die Zusammensetzung und Herstellung entspricht Beispiel 1. Der Korndurchmesser liegt im Durchschnitt unterhalb von 5 Mikrometer, wie anhand des Maßstabs gezeigt ist. Grau sind die Körner des Füllstoffes 30 und hell die amorphe Matrix-Phase 20 sichtbar.

Das Diagramm in Figur 2 zeigt den elektrischen Widerstand für einen Temperaturbereich bis 1200° C. Der Volumenanteil des Füllstoffgemisches MoSi₂:Si = 20:20 ist 40 Vol.%, bezogen auf das gesamte Volumen. Der elektrische Widerstand steigt etwa linear bis ca. 800° C und flacht dann ab. Wesentlich niedriger ist der spezifische elektrische Widerstand bei einem Material mit 50 Vol.% MoSi₂ als Füllstoff, das aber ebenfalls einen positiven Temperaturkoeffizienten besitzt. Eine Erhöhung des Volumenanteils der Leitstoffmischung führt demnach erwartungsgemäß zur Erniedrigung des spezifischen elektrischen Widerstands.

Figur 3 zeigt ein Schaubild ähnlich dem der Figur 2, jedoch für einen Füllstoff-Volumenanteil von 50 Vol.% Si₃N₄ (β-Si₃N₄). Mit zunehmender Temperatur wird der Widerstand leitfähiger, das heißt der Widerstand weist einen negativen Temperaturkoeffizienten auf. Es wurden auch Füllstoffmischungen hergestellt aus Füllstoffen, die einen positiven und Füllstoffen, die einen negativen Temperaturkoeffizienten für Widerstände verursachen, um einen konstanten Widerstandsbereich einzustellen.

Wenn im folgenden nicht auf die Pyrolyse eingegangen wird, so wird sie für die Beispiele mit dem Schutzgas Argon ausgeführt.

### Beispiel 1:

In ein Becherglas werden 23,1 g additionsvernetzendes Methyl-Phenyl-Vinyl-Hydrogen-Polysiloxan (Wacker Silicon-Imprägnierharz H62 C) eingegeben und in 50 ml Aceton gelöst. In dieser Lösung werden mittels eines Magnetrührers 126,9 g MoSi₂-Pulver (H. C. Starck Molybdändisilicid, Grade B, Korngröße d₅₀ = 3,0 µm, 98 % < 10 µm) dispergiert. Dies entspricht einem Füllgrad von 50 Vol.% bezogen auf die lösungsmittelfreie Polymer-Füller-Mischung. Die Suspension wird auf eine Hostaphan™-Folie gegossen und das Aceton im Umluft-Trockenschrank bei 50° C ausgetrieben. Alternativ kommen auch andere Lösungsmittel zum Einsatz wie beispielsweise Toluol, Hexan, alicyclische oder aromatische Kohlenwasserstoffe. Man erhält eine knetartige Masse, die von Hand portioniert werden kann. Die Masse wird in eine Preßform eingedrückt und bei einem Druck von 10 MPa und einer Temperatur von 200° C über 30 min. ausgehärtet.

Der so erhaltene Formkörper wird unter fließendem Argon (5 l/h) mit folgendem Temperaturprogramm der Tabelle 1 pyrolysiert:

**Tabelle 1**

| Aufheiz/Abkühlrate (°C/min) | Endtemperatur (°C) | Haltezeit (min) |
|---|---|---|
| 5 | 450 | 120 |
| 5 | 1 200 | 240 |
| 2,5 | 20 | - |

Das Material besteht, wie in Figur 1 gezeigt, weitgehend aus MoSi₂, das in einer amorphen Si-Oₓ-C_{y}-Matrix eingebettet ist. Sehr geringe Mengen von MoSi₂ reagieren mit Kohlenstoff aus dem Polymer zu SiC und MoC₂. Der Körper besitzt eine Dichte von 4,1 g/cm³ und eine offene Porosität von 14,3 %. Der spezifische elektrische Widerstand R_{spez} bei Raumtemperatur, gemessen in Vierpunkttechnik mit einem Burster Digomat Mikroohmmeter Typ 2302 an stäbchenförmigen Proben mit rechteckigem Querschnitt, beträgt 2,2 x 10⁻⁴ Ohm cm. Die mechanische 4-Punkt-Biege-Festigkeit des Materials liegt bei 115 MPa.

### Beispiel 2:

Es wird wie in Beispiel 1 vorgegangen, jedoch wird MoSi₂-Pulver als Füller durch CrSi₂-Pulver ersetzt (H. C. Starck Chromsilicid, < 10 micron, Korngröße d₅₀ = 3.7 µm) und in einem Volumenanteil von 40 Vol.% zugegeben. Nach der Pyrolyse besteht der in der amorphen Matrix eingebettete Füller überwiegend noch immer aus CrSi₂. Daneben liegen als kristalline Phasen CrSi, SiC und SiO₂ (Cristobalit) vor. Das pyrolysierte Material hat eine Dichte von 3,5 g/cm³ und eine offene Porosität von 3,3 %. Der spezifische elektrische Raumtemperatur-Widerstand beträgt 3,0 x 10⁻³ Ohm cm, die Biegefestigkeit 120 MPa.

### Beispiel 3:

Das Verfahren aus Beispiel 1 wird mit dem Unterschied wiederholt, daß anstelle von MoSi₂-Pulver 50 Vol.% Siliciumpulver (H. C. Starck SiMP, B 10, Korngröße d₅₀ = 4,4 µm) zugegeben werden. Der Si-Füllstoff bleibt fast unverändert, es bilden sich nur sehr geringe Mengen an SiC. Dieses Material besitzt eine Dichte von 2,1 g/cm³ bei einer offenen Porosität von 3,3 %. Der spezifische elektrische Raumtemperatur-Widerstand beträgt 1,0 x 10² Ohm cm, die Biegefestigkeit 70 MPa.

### Beispiel 4:

Es wird wie in Beispiel 1 vorgegangen, jedoch wird zu 28,5 g Siloxan-Harz eine Pulvermischung aus 19,5 g Si- und 52,0 g MoSi₂-Pulver zugegeben. Dies entspricht einem Füllergehalt von 20 Vol.% Si (H. C. Starck SiMP, B 10) und 20 Vol.% MoSi₂ (H. C. Starck Molybdändisilicid, Grade B). Das pyrolysierte Material hat eine Dichte von 3,2 g/cm ³ bei einer offenen Porosität von 0,3 %. Der spezifische Raumtemperatur-Widerstand beträgt 1,6 x 10⁻³ Ohm cm. Die Biegefestigkeit ist 120 MPa.

### Beispiel 5:

Es wird wie in Beispiel 1 vorgegangen, wobei 42,2 g Siloxan in 100 g Aceton gelöst werden. In der Lösung werden 49,8 g SiC (SiC-Pulver F600 grau, Elektrochschmelzwerk Kempten, 90 % < 22 µm, mittlere Korngröße 12 µm) und 57,9g MoSi₂ dispergiert. Dies entspricht einem Anteil der Füllstoffe von 40 Vol.% bezogen auf die lösungsmittelfreie Polymer-Füller-Mischung, wobei MoSi₂:SiC im Verhältnis von 15:25 Vol.% eingesetzt werden. Der spezifische elektrische Widerstand R_{spez} beträgt 2 x 10 Ohm cm.

### Beispiel 6:

Es wird wie in Beispiel 1 vorgegangen, wobei 80,1 g Siloxan in 150 g Aceton gelöst werden. In der Lösung werden 42,5 g SiC und 27,4 g MoSi₂ dispergiert. Dies entspricht einem Anteil des Füllstoffs von 20 Vol.% bezogen auf die lösungsfreie Polymer-Füller-Mischung mit einem Verhältnis von MoSi₂:SiC = 5:15 Vol.%. Der spezifische elektrische Widerstand R_{spez} beträgt 3 x 10⁸ Ohm cm.

### Beispiel 7:

Es wird gemäß Beispiel 1 ein Material mit dem Unterschied hergestellt, daß anstelle von MoSi₂-Pulver 50 Vol.% Graphit-Pulver (Aldrich 28, 286-3, Korngröße: 1 bis 2 µm) zugegeben wird. Der pyrolysierte Körper besitzt eine Dichte von 1,9 g/cm³ bei einer offenen Porosität von 8,9 %. Der spezifische elektrische Widerstand bei Raumtemperatur beträgt 1,6 x 10⁻² Ohm cm.

### Beispiel 8:

Es wird wie in Beispiel 1 vorgegangen, doch wird als Füller Si₃N₄-Pulver (H. C. Starck Si3N4, S1, Korngröße d₅₀ = 0,9 µm) zugegeben. Der Füllgrad beträgt 50 Vol.%. Es entsteht ein hochohmiges Material, dessen spezifischer Raumtemperatur-Widerstand mit einem Teraohmmeter HP 4339A in Zweipunkttechnik ermittelt wurde. Er beträgt 3,6 x 10¹⁰ Ohm cm. Die Dichte liegt bei 2,1 g/cm³, die offene Porosität bei 27,4 %. Beispiel 6 wurde mit AlN und BN wiederholt.

### Beispiel 9:

Es wird ein Keramik-Material nach dem in Beispiel 1 beschriebenen Vorgehen hergestellt, jedoch werden als Füller 30 Vol.% Al₂O₃-Pulver (Alcoa XA 1000, Korngröße d₅₀ = 0,5 µm) zugegeben. Die pyrolysierte Keramik besitzt einen spezifischen elektrischen Raumtemperatur-Widerstand von 3,5 x 10⁴ Ohm cm. Die Dichte beträgt 2,8 g/cm³ bei einer offenen Porosität von 2,8 %.

### Beispiel 10:

Es wird wie in Beispiel 1 vorgegangen, jedoch werden als Füller 70 Vol.% Fe-Pulver (Höganäs ASC 100, Korngröße d₅₀ = 60 µm) zugegeben. Die Dichte des pyrolysierten Materials beträgt 6,1 g/cm³ bei einer offenen Porosität von 13,8 %. Das Material besitzt einen elektrischen Raumtemperatur-Widerstand von 2,0 x 10⁻⁵ Ohm cm.

### Beispiel 11:

Nach dem Beispiel 8 wird ein Formkörper hergestellt, der anstelle von reinem Fe-Pulver eine Mischung aus Fe- und ZrO₂-Pulver enthält. Der Füllstoffgehalt beträgt 20 Vol.% Fe (Höganäs ASC 100) und 20 Vol.% ZrO₂ (Magnesium Electron Ltd. Zirkoniumdioxid SC 30 R, Korngröße d₅₀ = 14,5 µm), bezogen auf 100 Vol.% Verbundkörper. Der spezifische Raumtemperatur-Widerstand des pyrolysierten Materials beträgt 2,2 x 10⁻³ Ohm cm. Beispiel 9 wurde mit ThO₂, CeO, CeO₂ oder einer Mischung von ZrO₂ mit HfO₂ wiederholt ausgeführt.

### Beispiel 12:

Es wird wie in Beispiel 3 vorgegangen, jedoch wird als Polymer ein kondensationsvernetzendes Polysiloxan (Chemiewerk Nünchritz NH 2400) eingesetzt, das bei Raumtemperatur in fester Form vorliegt. Anstelle einer knetartigen Masse erhält man nach Abzug des Lösungsmittels ein grobkörniges Granulat, das durch Mahlen weiterverarbeitet wird. Das gemahlene Granulat wird in Abweichung von Beispiel 3 durch Spritzgießen in Form gebracht und anschließend wie in Beispiel 1 beschrieben pyrolysiert.

### Beispiel 13:

Es wird ein Material gemäß Beispiel 6 hergestellt, jedoch wird als Polymer anstelle von Polysiloxan ein Polysilazan (Hoechst VT 50) eingesetzt und mit 50 Vol.% Si₃N₄-Pulver gefüllt. Die Zugabe von Aceton entfällt, da das Polysilazan bereits in THF gelöst ist. Die Pyrolyse erfolgt unter fließender Stickstoffatmosphäre. In Abweichung von den Beispielen 1 bis 12 besteht die amorphe Matrix hier aus Si_{1,0}N_{1,3}C_{1,6}. Die Dichte des pyrolysierten Materials beträgt 1,8 g/cm³ bei einer offenen Porosität von 24,0 %. Die eingesetzte Korngröße der Pulver der Beispiele 1 bis 14 wurde variiert, wenn dadurch eine bessere Anpassung an den Einsatzzweck des Verbundkörpers eintrat.

### Beispiel 14: Keramisches Glühelement

Nach einem der in den Beispielen 1 bis 12 beschriebenen Verfahren wird ein U-förmiger Körper hergestellt. Die Formgebung erfolgt durch Warmpressen.

Über eine Lötverbindung werden die Schenkel kontaktiert. Die Materialzusammensetzung wird so gewählt, daß bei Anlegen einer vorzugebenden Spannung an die Kontaktstellen der Körper an der Stelle seines geringsten Querschnitts glüht und eine für die Zündung eines Gases oder Gasgemisches erforderliche Temperatur erreicht.

### Beispiel 15: Hochtemperaturbeständige Leiterbahn

Gemäß den Beispielen 1 bis 12 wird eine Polymer-Füller-Mischung hergestellt. Nach Abzug des Lösungsmittels wird die Masse durch Rakeln oder durch Siebdruck strukturiert auf ein noch nicht pyrolysiertes gefülltes siliciumorganisches Substrat aufgetragen. Die gefüllte Polymerschicht wird im Trockenschrank bei 200° C ausgehärtet. Anschließend werden Schicht und Substrat bei Temperaturen zwischen 800 und 1400° C gemeinsam pyrolysiert. Man erhält eine hochtemperaturbeständige Leiterbahn auf dem Substrat, deren Widerstand über die Füllerzusammensetzung eingestellt werden kann.

### Beispiel 16: Hochtemperaturbeständige elektrische Schaltung

Es wird wie in Beispiel 13 vorgegangen, jedoch werden Strukturen aufgetragen, die aus Polymer/Füller-Mischungen mit lokal unterschiedlicher Zusammensetzung bestehen, die unterschiedliche elektrische Widerstände ergeben. Man erhält eine hochtemperaturbeständige elektrische Schaltung. Die Zusammensetzung der Polymer/Füller-Mischung kann sowohl in der Ebene des Substrats als auch senkrecht dazu variiert werden. Im zweiten Fall wird die elektrische Schaltung in Mehrlagentechnik aufgebaut.

## Patentansprüche

1. Verfahren zur Herstellung eines keramischen elektrischen, Widerstandes (10) zur Anwendung in elektrischen Schaltungen in Form von Widerständen oder Leitern, der durch Keramisieren mindestens eines Füllstoffes (30), eingebettet in eine Matrix (20) aus mindestens einem siliciumorganischen Polymers, hergestellt wird, dadurch gekennzeichnet, daß als Füllstoff mindestens eine Komponente, ausgewählt aus der Gruppe MoSi₂, CrSi₂, Si, SiC, Graphit, Si₃N₄, Al₂O₃, Fe, sowie Fe gemischt mit ZrO₂, ThO₂, CeO, CeO₂ oder einer Mischung von ZrO₂ mit HfO₂, verwendet wird, daß der Füllstoffanteil 20 bis 70 % bezogen auf die lösungsmittelfreie Polymer-Füllstoff-Mischung beträgt und daß über die Art und den Anteil des Füllstoffes der spezifische elektrische Widerstand des keramisierten Materials eingestellt wird.

2. Verfahren nach Anspruch 1, dadurch gekennzeichnet, daß der elektrisch leitfähigen Komponente mindestens eine weitere elektrisch isolierende und/oder halbleitende Komponente zugesetzt ist.

3. Verfahren nach Anspruch 1 oder 2, dadurch gekennzeichnet, daß die elektrisch leitfähige Komponente MoSi₂ ist, die mit 5 bis 50 Vol. % bezogen auf die lösungsmittelfreie Polymer-Füllstoff-Mischung eingesetzt ist.

4. Verfahren nach Anspruch 3, dadurch gekennzeichnet, daß dem MoSi₂ als weitere Komponente Si zugesetzt ist.

5. Verfahren nach Anspruch 4, dadurch gekennzeichnet, daß das Mischungsverhältnis MoSi₂:Si so gewählt ist, daß eine lineare Widerstand-Temperatur-Abhängigkeit im Temperaturbereich von 0 bis 900 Grad Celsius einstellbar ist.

6. Verfahren nach Anspruch 4 oder 5, dadurch gekennzeichnet, daß das Füllstoffgemisch 40 Vol.% bezogen auf das Gesamtvolumen beträgt und das MoSi₂ und das Si im Verhältnis von 1:1 eingesetzt sind.

7. Verfahren nach Anspruch 3, dadurch gekennzeichnet, daß dem MoSi₂ als weitere Komponente SiC zugesetzt ist.

8. Verfahren nach Anspruch 7, dadurch gekennzeichnet, daß das Mischungsverhältnis von MoSi₂:SiC 5:15 bis 15:25 Vol. % bezogen auf das Gesamtvolumen beträgt.

9. Verfahren nach Anspruch 1, dadurch gekennzeichnet, daß die Füllstoffe als keramische oder metallische Pulver mit einer Korngröße von 0,01 bis 100 µm eingesetzt werden.

10. Verfahren nach Anspruch 1, dadurch gekennzeichnet, daß die eingesetzten siliciumorganischen Polymere Polysilane, Polycarbosilane, Polysilazane oder Polysiloxane sind.

11. Verfahren zur Herstellung eines keramischen elektrischen Widerstandes (10) zur Anwendung als Heizleiter, der durch Keramisieren mindestens eines Füllstoffs (30), eingebettet in eine Matrix (20) aus mindestens einem siliciumorganischen Polymer hergestellt wird, dadurch gekennzeichnet, daß als Füllstoff mindestens eine Komponente, ausgewählt aus der Gruppe MoSi₂, CrSi₂, Si, SiC, Graphit, SiN₄, Al₂O₃, Fe sowie Fe gemischt mit ZrO₂, ThO₂, CeO, CeO₂ oder einer Mischung von ZrO₂ mit HfO₂, verwendet wird, daß der Füllstoffanteil 20 bis 70 % bezogen auf die lösungsmittelfreie Polymer-Füllstoff-Mischung beträgt und daß über die Art und den Anteil des Füllstoffes der spezifische elektrische Widerstand des keramisierten Materials eingestellt wird.

12. Verfahren nach Anspruch 11, dadurch gekennzeichnet, daß der Heizleiter für Glühstiftkerzen verwendet wird.

## Claims

1. Method of producing a ceramic electrical resistor (10) for use in electric circuits in the form of resistors or conductors, which is produced by ceramicizing at least one filler (30) embedded in a matrix (20) of at least one organosilicon polymer, characterized in that the filler used is at least one component selected from the group consisting of MoSi₂, CrSi₂, Si, SiC, graphite, Si₃N₄, Al₂O₃, Fe and Fe mixed with ZrO₂, ThO₂, CeO, CeO₂ or a mixture of ZrO₂ with HfO₂, that the proportion of filler is from 20 to 70% based on the solvent-free polymer/filler mixture and that the electrical resistivity of the ceramicized material is set via the type and the proportion of the filler.

2. Method according to Claim 1, characterized in that a further electrically insulating and/or semiconducting component is added to the electrically conductive component.

3. Method according to Claim 1 or 2, characterized in that the electrically conductive component is MoSi₂ which is used in an amount of from 5 to 50% by volume, based on the solvent-free polymer/filler mixture.

4. Method according to Claim 3, characterized in that the further component added to the MoSi₂ is Si.

5. Method according to Claim 4, characterized in that the mixing ratio of MoSi₂:Si is selected such that a linear resistance-temperature dependence can be obtained in the temperature range from 0 to 900 degrees C.

6. Method according to claim 4 or 5, characterized in that the filler mixture makes up 40% by volume of the total volume and that the MoSi₂ and the Si are used in a ratio of 1:1.

7. Method according to Claim 3, characterized in that the further component added to the MoSi₂ is SiC.

8. Method according to Claim 7, characterized in that the mixing ratio of MoSi₂:SiC is from 5:15 to 15:25% by volume, based on the total volume.

9. Method according to Claim 1, characterized in that the fillers are used as ceramic or metallic powders having a particle size of from 0.01 to 100 µm.

10. Method according to Claim 1, characterized in that the organosilicon polymers used are polysilanes, polycarbosilanes, polysilazanes or polysiloxanes.

11. Method of producing a ceramic electrical resistor (10) for use as heating element, which is produced by ceramicizing at least one filler (30) embedded in a matrix (20) of at least one organosilicon polymer, characterized in that the filler used is at least one component selected from the group consisting of MoSi₂, CrSi₂, Si, SiC, graphite, Si₃N₄, Al₂O₃, Fe and Fe mixed with ZrO₂, ThO₂, CeO, CeO₂ or a mixture of ZrO₂ with HfO₂, that the proportion of filler is from 20 to 70% based on the solvent-free polymer/filler mixture and that the electrical resistivity of the ceramicized material is set via the type and the proportion of the filler.

12. Method according to Claim 11, characterized in that the heating element is used for pencil-type glow plugs.

## Revendications

1. Procédé de fabrication d'une résistance électrique (10) en céramique, pour des applications à des circuits électriques sous la forme de résistances ou de conducteurs, obtenu par transformation d'une charge (30) en céramique, intégrée dans une matrice (20) d'au moins un polymère silico-organique,
caractérisé en ce que
comme charge on utilise au moins un composant choisi dans le groupe MoSi₂, CrSi₂, Si, SiC, graphite, Si₃N₄, Al₂O₃, Fe, et Fe mélangé à ZrO₂, ThO₂, CeO, CeO₂ ou un mélange de ZrO₂ avec HfO₂, et la teneur en charge est de 20 à 70 % par rapport au mélange polymère/charge sans solvant et en ce que par la nature et la teneur en charge on règle la résistance spécifique de la matière céramique.

2. Procédé selon la revendication 1,
caractérisé en ce que
le composant conducteur électrique reçoit, en addition, au moins un autre composant isolant électrique et/ou semiconducteur.

3. Procédé selon la revendication 1 ou 2,
caractérisé en ce que
le composant conducteur électrique (MoSi₂) est utilisé suivant un pourcentage de 5 à 50 % en volume dans le mélange polymère/charge sans solvant.

4. Procédé selon la revendication 3,
caractérisé en ce qu'
au composant (MoSi₂) on ajoute comme autre composant (Si).

5. Procédé selon la revendication 4,
caractérisé en ce que
le rapport de mélange (MoSi₂/Si) est choisi pour avoir une caractéristique de résistance linéaire en température dans la plage de températures comprise entre 0 et 900°C.

6. Procédé selon la revendication 4 ou 5,
caractérisé en ce que
le mélange de charge est égal à 40 % en volume par rapport au volume total et (MoSi₂) et (Si) sont utilisés dans un rapport 1/1.

7. Procédé selon la revendication 3,
caractérisé en ce qu'
on ajoute à (MoSi₂) comme autre composant (SiC).

8. Procédé selon la revendication 7,
caractérisé en ce que
le rapport de mélange (MoSi₂/Sic) est compris entre 5/15 jusqu'à 15/25 % en volume rapporté au volume total.

9. Procédé selon la revendication 1,
caractérisé en ce que
la matière de remplissage utilisée est une poudre céramico-métallique avec une granulométrie comprise entre 0,01 et 100 µm.

10. Procédé selon la revendication 1,
caractérisé en ce que
les polymères silico-organiques utilisés sont des polysilanes, des polycarbosilanes, des polylazanes ou du polysiloxane.

11. Procédé de fabrication d'une résistance électrique (10) en céramique pour son application comme conducteur chauffant, obtenu par transformation d'une charge (30) en céramique, intégrée dans une matrice (20) d'au moins un polymère silico-organique,
caractérisé en ce que
comme charge on utilise au moins un composant choisi dans le groupe MoSi₂, CrSi₂, Si, SiC, graphite, Si₃N₄, Al₂O₃, Fe, et Fe mélangé à ZrO₂, ThO₂, CeO, CeO₂ ou un mélange de ZrO₂ avec HfO₂, et la teneur en charge est de 20 à 70 % par rapport au mélange polymère/charge sans solvant et en ce que par la nature et la teneur en charge on règle la résistance spécifique de la matière céramique et par la nature et la teneur de la charge on règle la résistance électronique spécifique de la matière céramique.

12. Procédé selon la revendication 11,
caractérisé en ce que
le conducteur chauffant est utilisé pour les électrodes de bougies d'allumage.
